# EUROPÄISCHE PATENTSCHRIFT

(11) **EP 1 876 086 B1**
(45) Veröffentlichungstag und Bekanntmachung des Hinweises auf die Patenterteilung: **30.09.2009**
(21) Anmeldenummer: 07011841.9
(22) Anmeldetag: 16.06.2007
(51) Int. Cl.: B62D 25/20, B62D 21/15

(54) **Bodenstruktur eines Kraftfahrzeugs mit einer Querbrücke zur Versteifung des Tunnelbereiches**
Floor structure of a motor vehicle wird lateral bridge for reinforcing the tunnel area
Structure au sol d'un véhicule automobile avec un pontage croisé destiné au durcissement de zones de tunnel

(30) Priorität: 07.07.2006 DE 102006031452
(43) Veröffentlichungstag der Anmeldung: 09.01.2008
(73) Patentinhaber: Dr. Ing. h.c. F. Porsche Aktiengesellschaft, 70435 Stuttgart (DE)
(72) Erfinder: Bachmann, Mike, 70197 Stuttgart (DE)

(56) Entgegenhaltungen:
- DE-A1- 10 005 245
- DE-A1- 10 235 532
- JP-A- 6 171 552
- JP-A- 10 226 364
- JP-A- 62 125 956

## Beschreibung

Die Erfindung betrifft eine Bodenstruktur nach dem Oberbegriff des Anspruchs 1.

Eine Bodenstruktur der eingangs genannten Gattung ist der DE 102 35 532 B4 zu entnehmen. Bei dieser Anordnung sind zur Befestigung der Querbrücke an der Bodenstruktur an gegenüberliegenden Seitenwänden des Tunnels jeweils zusätzliche U-profilförmige Konsolen angebracht, die seitliche Schenkel der Querbrücke formschlüssig in sich aufnehmen. Zur Festlegung der Querbrücke an den Konsolen ist jeder Schenkel über zwei sich in Fahrzeuglängsrichtung erstreckende, in Höhenrichtung versetzt zueinander angeordnete, horizontal ausgerichtete Befestigungsschrauben mit der jeweiligen Konsole verbunden.

Für Fahrzeuge, bei denen die Motor-Getriebeeinheit von unten her an die Rohbaukarosserie herangefahren wird, stellen die in Fahrzeuglängsrichtung verlaufenden, horizontal ausgerichteten Befestigungsschrauben eine ungünstige Montagerichtung dar. Zudem werden zur Festlegung jeder Querbrücke zusätzliche mit dem Tunnel verbindbare Konsolen benötigt.

Bei einem Seitenaufprall gelangen die schräg verlaufenden seitlichen Stützschenkel der Querbrücke in direkten Kontakt mit benachbart angeordneten schräg verlaufenden Seitenwänden des Tunnels, wobei hohe Biegebelastungen auf die Stützschenkel der Querbrücke einwirken.

Aufgabe der Erfindung ist es, eine Bodenstruktur der eingangs genannten Gattung so weiterzubilden, dass bei guter Versteifungswirkung die Montage der Querbrücke und der mit ihr verbundenen Bauteile vereinfacht wird und dass darüber hinaus bei einem Seitenaufprall Biegebelastungen der seitlichen Stützschenkel der Querbrücke weitgehend vermieden werden.

Diese Aufgabe wird durch die Merkmale des Anspruchs 1 gelöst. Weitere, die Erfindung in vorteilhafter Weise ausgestaltende Merkmale enthalten die Unteransprüche.

Durch die erfindungsgemäße Lösung wird gewährleistet, dass die Querbrücken an einer vorgefertigten Motor-Fahrwerk-Getriebeeinheit vormontiert und dann gemeinsam an der Rohbaukarosserie von unten her über vertikal angeordnete Befestigungselemente festgelegt werden können.

Durch die Anordnung von vertikal ausgerichteten Wandungen an beiden Längsseiten des oberen Brückenelements der Querbrücke und von korrespondierenden vertikalen Wandabschnitten an den Tunnelseitenwänden wird erreicht, dass bei einem Seitenaufprall zuerst eine Blockbildung zwischen den vertikalen Wandungen von Tunnelseitenwand und oberem Brückenelement erfolgt, so dass die Hauptlast bei einem Seitenaufprall als reine Druckkraft über das obere Brückenelement auf die der Aufprallseite gegenüberliegende Seite der Bodenstruktur übertragen wird.

Durch die querverlaufenden Langlöcher an der Querbrücke im Bereich der Schraubbefestigungen wird erreicht, dass insbesondere die vertikalen Wandabschnitte der Tunnelseitenwände bzw. der Sitzquerträger in direkten Kontakt mit gleichgerichteten Wandungen des oberen Brückenelementes gelangen. Über die Schraubbefestigungen und die schräg verlaufenden Stützschenkel wird nur ein sehr geringer Anteil der bei einem Seitenaufprall auftretenden Kräfte vom Sitzquerträger bzw. dem Tunnelbereich auf die Querbrücke übertragen.

Die Querbrücke wird vorzugsweise durch ein verripptes Gussteil aus einer Leichtmetalllegierung gebildet. Die querverlaufenden vertikalen Hauptrippen sowie die längsverlaufenden vertikalen Rippen steifen die Querbrücke hinreichend aus. Die obere Begrenzung des Brückenelementes kann einen geradlinigen, einen abgewinkelten oder einen bogenförmigen Formverlauf aufweisen. Die etwa horizontal ausgerichteten plattenförmigen Befestigungsabschnitte sind einstückig mit der Querbrücke ausgebildet. Durch den Versatz in Fahrzeuglängs-, Fahrzeugquer- und Fahrzeughöhenrichtung der zumindest zwei Schraubbefestigungen an jedem Befestigungsabschnitt wird eine steife Anbindung der Querbrücke an die Rohbaukarosserie (Sitzquerträger) erzielt.

Ein Ausführungsbeispiel der Erfindung ist in der Zeichnung dargestellt und wird im folgenden näher erläutert.

Es zeigen
- Fig. 1: eine perspektivische Teilansicht von schräg vorne auf einen Tunnelbereich einer Bodenstruktur einer Kraftfahrzeugkarosserie, wobei der Tunnelbereich im Bereich von Sitzquerträgern mit einer von unten aufgesetzten Querbrücke versehen ist,
- Fig. 2: eine Teilansicht von unten auf die Querbrücke und die angrenzende Bodenstruktur,
- Fig. 3: einen Schnitt nach der Linie III-III der Fig. 2 in größerer Darstellung,
- Fig. 4: eine Draufsicht auf die Querbrücke,
- Fig. 5: eine Ansicht von unten auf die Querbrücke,
- Fig. 6: einen Schnitt nach der Linie VI-VI der Fig. 5.

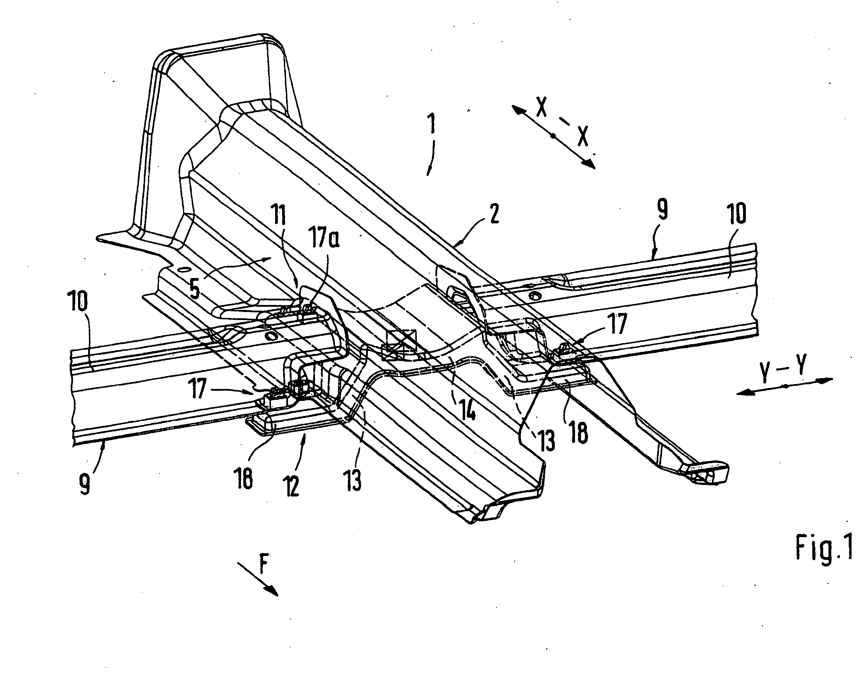

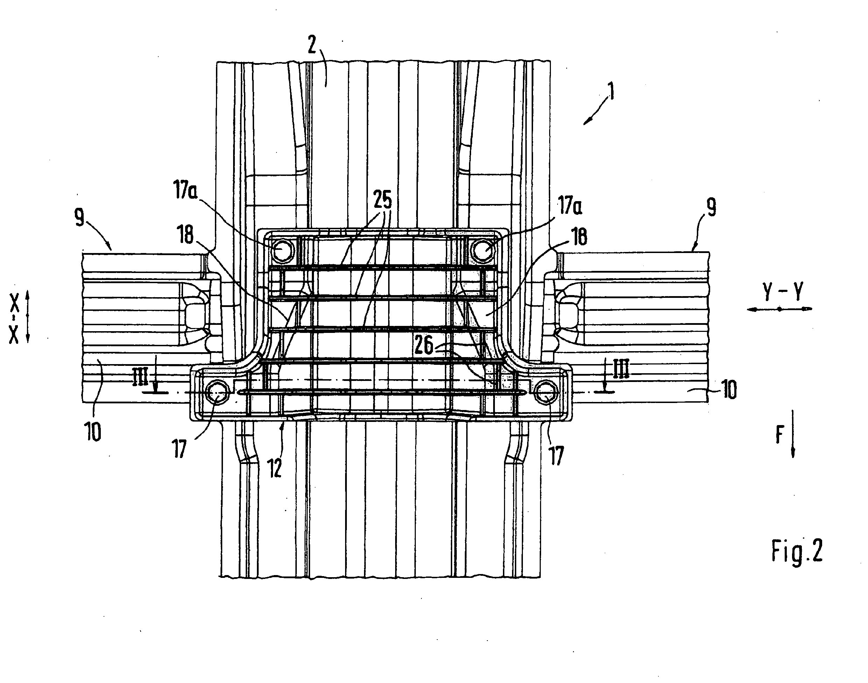

Eine Bodenstruktur 1 nach den Fig. 1 oder 2 ist Teil einer selbsttragenden Rohbaukarosserie eines Personenkraftwagens und weist im Bereich eines Fahrgastraumes einen sich in Fahrzeuglängsrichtung X-X erstreckenden Tunnelbereich 2 auf. Der Tunnelbereich 2 setzt sich - im Querschnitt gesehen - aus einem profilierten, nach unten hin offenen Tunnelblech 3 und einer von oben auf das Tunnelblech 3 aufgesetzten und mit dieser verbundenen profilierten äußeren Tunnelverstärkung 4 zusammen. Tunnelseitenwände 5 des Tunnelbereichs 2 weisen in einem unteren Endbereich jeweils schräg nach außen gerichtete Abschnitte 6 auf. Vorzugsweise im Bereich der schräg verlaufenden Abschnitte 6 ist jeweils der angrenzende Fahrzeugboden 7 über Flansche 8 an den Tunnelbereich 2 angebunden. Der äußere Rand des Fahrzeugbodens 7 ist in nicht näher dargestellter Weise an seitliche Schweller angeschlossen.

Örtlich sind auf der dem Fahrgastraum zugekehrten Seite des Fahrzeugbodens 7 zu dessen Aussteifung sich in Fahrzeugquerrichtung Y-Y erstreckende Sitzquerträger 9 angeordnet. Jeder Sitzquerträger 9 wird durch ein hutförmig profiliertes Blechpressteil 10 gebildet, das von oben auf den Fahrzeugboden 7 aufgesetzt und über seitlich abgestellte Flansche mit diesem fest verbunden ist, beispielsweise durch Verschweißen.

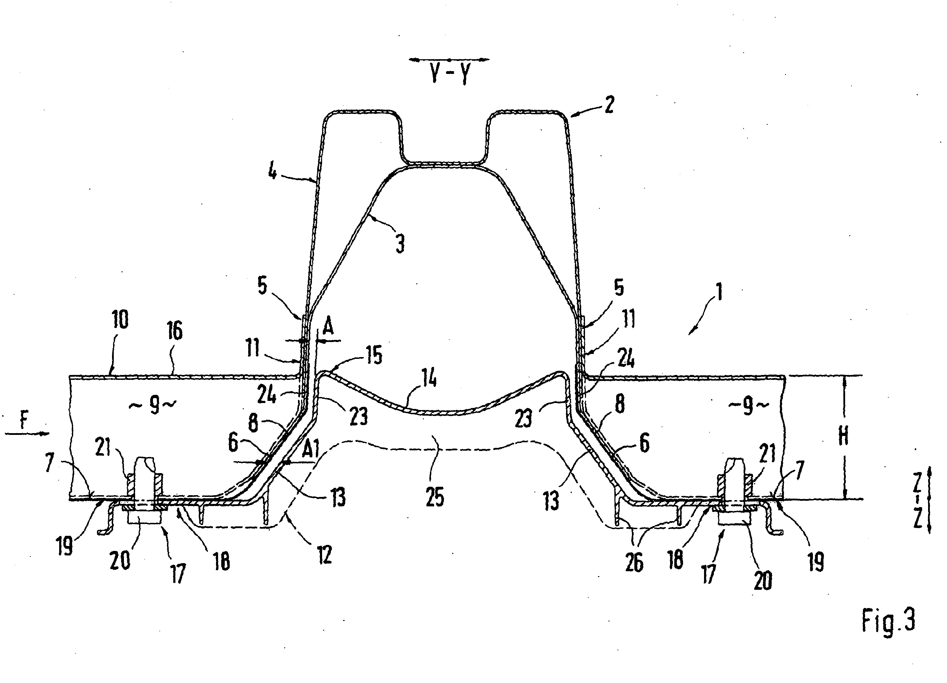

Das nicht dargestellte äußere Ende jedes Sitzquerträgers 9 ist an die Innenseite des außenliegenden Schwellers angeschlossen, wogegen das innere Ende 11 jedes Sitzquerträgers 9 an die Außenseite des Tunnelbereichs 2 angebunden ist. Jeder hohlträgerartig ausgebildete Sitzquerträger 9 weist eine Höhenerstreckung H auf (Fig. 3).

Zur Versteifung des Tunnelbereiches 2 der Bodenstruktur 1 im dynamischen Fahrbetrieb des Personenkraftwagens und bei einem Seitenaufprall ist im Bereich der beabstandet angeordneten Sitzquerträger 9 zumindest eine profilierte Querbrücke 12 vorgesehen, die lösbar mit der Bodenstruktur 1 verbunden ist. Die in Fig. 3 dargestellte Querbrücke 12 erstreckt sich - in Fahrzeugquerrichtung Y-Y gesehen - vorzugsweise zwischen den beiden beabstandeten Sitzquerträgern 9 der Bodenstruktur 1. Jede Querbrücke 12 weist zwei schräg verlaufende, seitliche Stützschenkel 13 und ein die beiden Stützschenkel 13 verbindendes oberes Brückenelement 14 auf. Ein oberer Rand 15 des Brückenelementes 14 verläuft annähernd auf gleicher Höhe wie die Oberkante 16 der beiden Sitzquerträger 9 (Fig. 3).

Eine einfache und schnelle Montage der Querbrücke 12 bzw. der mit der Querbrücke 12 vormontierten, nicht näher dargestellten Motor-Fahrwerk-Getriebeeinheit wird dadurch erzielt, dass die Querbrücke 12 von unten her auf den Tunnelbereich 2 aufgesetzt und über vertikal ausgerichtete Schraubbefestigungen 17, 17a an der Unterseite 19 der Sitzquerträger 9 der Bodenstruktur 1 befestigt wird. Hierzu weist die Querbrücke 12 in einem unteren Bereich zwei - in Fahrzeugquerrichtung Y-Y gesehen - mit Abstand zueinander angeordnete plattenförmige Befestigungsabschnitte 18 auf, die etwa horizontal ausgerichtet und an der Unterseite 19 der Bodenstruktur 1 im Bereich der Sitzquerträger 9 anliegen. Die beiden plattenförmigen, horizontal ausgerichteten Befestigungsabschnitte 18 sind einstückig an die unteren Enden der angrenzenden schräg verlaufenden Stützschenkel 13 angeschlossen und übergreifen mit ihren freien Enden den Tunnelbereich 2 in Fahrzeugquerrichtung Y-Y. An jedem seitlichen Befestigungsabschnitt 18 der Querbrücke 12 sind jeweils zumindest zwei beabstandet angeordnete Schraubbefestigungen 17, 17a vorgesehen. Eine besonders steife Anbindung der Querbrücke 12 an die Bodenstruktur 1 wird dadurch erzielt, dass die zumindest zwei Schraubbefestigungen 17, 17a jedes Befestigungsabschnitts 18 der Querbrücke 12 in Fahrzeuglängs-, Fahrzeugquer- und Fahrzeughöhenrichtung versetzt zueinander angeordnet sind. Gemäß Fig. 2 sind die beiden - in Fahrtrichtung F gesehen - vorne liegenden Schraubbefestigungen 17 in Fahrzeugquerrichtung Y-Y in Fahrzeugquerrichtung Y-Y weiter voneinander beabstandet als die hinten liegenden Schraubbefestigungen 17a. Jede Schraubbefestigung 17, 17a wird durch eine Befestigungsschraube 20 gebildet, die vorzugsweise von der Unterseite 19 der Bodenstruktur 1 her in eine aufbauseitig feststehende Gewindeaufnahme 21 eindrehbar ist.

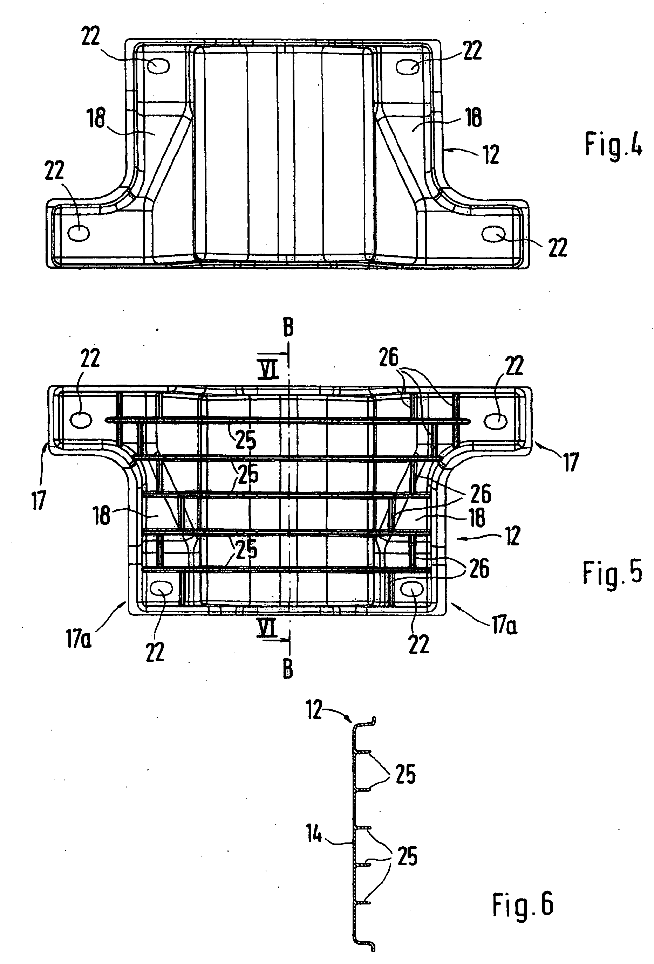

Die sich in vertikaler Richtung Z-Z erstreckenden Befestigungsschrauben 19 der Schraubbefestigungen 17, 17a zum Festlegen der Querbrücke 12 sind durch Öffnungen der Querbrücke 12 hindurchgeführt, wobei diese Öffnungen als querverlaufende Langlöcher 22 ausgebildet sind (Fig. 4 und 5).

Damit bei einem Seitenaufprall Biegebelastungen der seitlichen Stützschenkel 13 der Querbrücke 12 weitgehend vermieden werden, weist die Querbrücke 12 im Bereich des oberen Brückenelements 14 an ihren beiden Längsseiten jeweils vertikal ausgerichtete Wandungen 23 auf, die mit geringem seitlichen Abstand (Spalt A) zu gleichgerichteten Wandabschnitten 24 der Tunnelseitenwände 5 verlaufen. Bei einem Seitenaufprall gelangen die vertikalen Wandabschnitte 24 der Tunnelseitenwände 5 zuerst in direkten Kontakt mit den vertikalen Wandungen 23 des Brückenelementes 14, wobei durch diese Verblockung der größte Teil der bei einem Seitenaufprall auftretenden Kräfte über den Tunnelbereich 2 hinweg als reine Druckkräfte auf die der Aufprallseite gegenüberliegende Seite der Bodenstruktur 1 übertragen werden.

Gemäß Fig. 3 weisen die vertikal ausgerichteten seitlichen Wandungen 23 des oberen Brückenelementes 14 eine geringere Höhenerstreckung auf als die vertikalen Wandabschnitte 24 der angrenzenden Tunnelseitenwände 5. Die vertikalen Wandabschnitte 24 sind mit ihren unteren Enden an die schräg verlaufenden Abschnitte 6 angeschlossen.

Wie aus Fig. 3 ersichtlich, erstrecken sich die vertikalen Wandabschnitte 24 sowohl unterhalb als auch oberhalb der Oberseite 16 der Sitzquerträger 9, wogegen die seitlichen Wandungen 23 im wesentlichen unterhalb der Oberseite 16 der Sitzquerträger 9 verlaufen.

Die querverlaufenden Langlöcher 22 an den Befestigungsabschnitten 18 der Querbrücke 12 unterstützen das seitliche Verlagern der Bodenstruktur 1 bzw. des Sitzquerträgers 9 in Richtung Querbrücke 12. Bei eingebauter Querbrücke 12 sind die seitlichen Spaltbereiche zum Tunnelbereich 2 - in Fahrzeugquerrichtung gesehen - im Bereich des oberen Brückenelementes 14 (Spalt A) kleiner als im Bereich der schräg verlaufenden Stützschenkel 13 (Spalt A1). Dadurch ist sichergestellt, dass bei einem Seitenaufprall zuerst die Verblockung zwischen den vertikalen Wandabschnitten 24 der Tunnelseitenwände 5 und den vertikalen Wandungen 23 des oberen Brückenelementes 14 erfolgt. Idealerweise weist das obere Brückenelement 14 - in Fahrzeugquerrichtung gesehen - einen geradlinigen Formverlauf auf. Da jedoch innerhalb des Tunnelbereiches 2 verschiedene Fahrzeugkomponenten wie eine Kardanwelle, Kühlwasserleitungen, Abgasleitungen oder dergleichen untergebracht sind, weist das Brückenelement 14 gemäß Fig. 3 einen nach unten oder oben abgewinkelten oder bogenförmigen Formverlauf auf.

Vorzugsweise wird die Querbrücke 12 durch ein verripptes Gussteil aus einer Leichtmetalllegierung gebildet. Aus den Fig. 2 und 3 ist ersichtlich, dass die Querbrücke 12 zu ihrer Aussteifung mehrere quer zur Fahrzeuglängsachse B-B verlaufende vertikale Hauptrippen 25 aufweist. Zusätzlich sind zwei benachbart angeordnete Hauptrippen 25 im Bereich jedes Befestigungsabschnittes 18 über zumindest eine in Fahrzeuglängsrichtung X-X verlaufende vertikale Rippe 26 miteinander verbunden. Die Hauptrippen 25 erstrecken sich nahezu über die gesamte Breite der Querbrücke 12, d.h. sie sind sowohl im Bereich des oberen Brückenelementes 14, der beiden seitlichen Stützschenkel 13 und der horizontalen Befestigungsabschnitte 18 angeordnet (siehe Fig. 3). An der Querbrücke 12 kann ferner ein Anguss für ein Kardanwellenlager vorgesehen sein (nicht näher dargestellt).

Mit der erfindungsgemäßen Querbrücke werden im dynamischen Fahrbetrieb die Betriebslasten (Momente Zug- und Druckkräfte) über die Schraubbefestigungen 17, 17a die seitlichen Stützschenkel 13 und das obere Brückenelement 14 von einer Seite der Bodenstruktur über den Tunnelbereich 2 hinweg auf die andere Seite der Bodenstruktur 1 übertragen. Durch die Trennung der Befestigungsebenen der Schraubbefestigungen 17, 17a in Fahrzeuglängs-, Fahrzeugquer- und Fahrzeughöhenrichtung können hohe dynamische Lasten im Fahrbetrieb wirkungsvoll übertragen werden.

Bei einem Seitenaufprall erfolgt zuerst ein Verblocken des oberen Brückenelementes 14 mit der Tunnelseitenwand 5; der größte Teil der auftretenden Kräfte werden als reine Druckkräfte nur über das obere Brückenelement 14 übertragen (Drucklast im geraden Weg ohne Kraftumlenkung). Erst zu einem späteren Zeitpunkt gelangen seitliche schräg verlaufende Stützschenkel 13 in Kontakt zu gleichgerichteten seitlichen Tunnelwandbereichen, so dass verhältnismäßig geringe Momente/Kräfte von den seitlichen Stützschenkeln 13 und den Schraubbefestigungen 17, 17a aufgenommen werden müssen.

## Patentansprüche

1. Bodenstruktur (1) eines Kraftfahrzeugs mit einem Tunnelbereich (2), zwei in Fahrzeugquerrichtung beabstandet angeordneten Sitzquerträgern (9) sowie einer lösbar an der Bodenstruktur (1) zwischen den Sitzquerträgern (9) vorgesehenen Querbrücke (12) zur Versteifung des Tunnelbereiches (12) der Bodenstruktur (1) des Kraftfahrzeuges im dynamischen Fahrbetrieb und bei einem Seitenaufprall, wobei jede lösbar an der Bodenstruktur (1) befestigte Querbrücke (12) zwei schräg verlaufende seitliche Stützschenkel (13) und ein die beiden Stützschenkel (13) verbindendes oberes Brückenelement (14) aufweist und das Brückenelement (14) mit seinem oberen Rand etwa in Höhe der Oberkante der beiden Sitzquerträger (9) verläuft, **dadurch gekennzeichnet, dass** die an der Unterseite (19) der beiden beabstandeten Sitzquerträger (9) befestigte Querbrücke (12) im Bereich des oberen Brückenelementes (14) an ihren beiden Längsseiten jeweils vertikal ausgerichtete Wandungen (23) aufweist, die mit geringem Abstand zu gleichgerichteten Wandabschnitten (24) der Tunnelseitenwände (5) verlaufen und dass bei einem Seitenaufprall die vertikalen Wandabschnitte (24) der Tunnelseitenwände (5) zuerst in direkten Kontakt mit den vertikalen Wandungen (23) des Brückenelementes (14) gelangen, wobei durch diese Verblockung der größte Teil der beim Seitenaufprall auftretenden Kräfte über den Tunnelbereich (2) hinweg als reine Druckkräfte auf die der Aufprallseite gegenüberliegende Seite der Bodenstruktur (1) übertragen werden.

2. Bodenstruktur nach Anspruch 1, **dadurch gekennzeichnet, dass** die Querbrücke (12) in einem unteren Bereich zwei in Querrichtung gesehen mit Abstand zueinander angeordnete plattenförmige Befestigungsabschnitte (18) aufweist, die etwa horizontal ausgerichtet sind und an der Unterseite der Bodenstruktur (1) im Bereich der Sitzquerträger (9) anliegen.

3. Bodenstruktur nach Anspruch 2, **dadurch gekennzeichnet, dass** an jedem seitlichen Befestigungsabschnitt (18) der Querbrücke (12) jeweils mindestens zwei beabstandet angeordnete Schraubbefestigungen (17, 17a) vorgesehen sind.

4. Bodenstruktur nach Anspruch 3, **dadurch gekennzeichnet, dass** die zumindest zwei Schraubbefestigungen (17,17a) jedes Befestigungsabschnittes (18) der Querbrücke (12) in Fahrzeuglängs-, Fahrzeugquer- und Fahrzeughöhenrichtung versetzt zueinander angeordnet sind.

5. Bodenstruktur nach einem oder mehreren der vorangegangenen Ansprüche, **dadurch gekennzeichnet, dass** die sich in vertikaler Richtung erstreckenden Befestigungsschrauben (20) jeder Schraubbefestigung (17, 17a) zum Festlegen der Querbrücke (12) durch Öffnungen der Querbrücke (12) hindurchgeführt sind, wobei die Öffnungen als querverlaufende Langlöcher (22) ausgebildet sind.

6. Bodenstruktur nach Anspruch 1, **dadurch gekennzeichnet, dass** die Querbrücke (12) als verripptes Gussteil aus einer Leichtmetalllegierung ausgebildet ist.

7. Bodenstruktur nach den Ansprüchen 1 und 6, **dadurch gekennzeichnet, dass** die Querbrücke (12) zu ihrer Aussteifung mehrere quer zur Fahrzeuglängsachse verlaufende vertikale Hauptrippen (25) aufweist.

8. Bodenstruktur nach Anspruch 7, **dadurch gekennzeichnet, dass** zwei benachbart angeordnete Hauptrippen (25) im Bereich jedes Befestigungsabschnittes (18) der Querbrücke (12) über zumindest eine in Fahrzeuglängsrichtung verlaufende vertikale Rippe (26) miteinander verbunden sind.

9. Bodenstruktur nach Anspruch 1, **dadurch gekennzeichnet, dass** die obere Begrenzung des Brückenelementes (14) einen geradlinigen, abgewinkelten oder bogenförmigen Formverlauf aufweist.

## Claims

1. Floor structure (1) of a motor vehicle having a tunnel region (2), two transverse seat struts (9) arranged spaced apart from one another in the transverse direction of the vehicle, and also a transverse bridge (12), provided releaseably on the floor structure (1) between the transverse seat struts (9), for reinforcing the tunnel region (2) of the floor structure (1) of the motor vehicle in dynamic drive operation and in the event of a side impact, each transverse bridge (12) releaseably fastened to the floor structure (1) comprising two obliquely extending lateral supporting arms (13) and an upper bridge element (14) connecting the two supporting arms (13) and the bridge element (14) extending with its upper edge approximately level with the upper edge of the two transverse seat struts (9), **characterized in that** the transverse bridge (12) fastened to the underside (19) of the two transverse seat struts (9) spaced apart from one another respectively comprises, in the region of the upper bridge element (14), on its two longitudinal sides, vertically oriented walls (23) which extend at a small distance from parallel wall portions (24) of the tunnel side walls (5) and **in that**, in the event of a side impact, the vertical wall portions (24) of the tunnel side walls (5) initially come into direct contact with the vertical walls (23) of the bridge element (14), as a result of this blocking, the greatest portion of the forces occurring in the event of a side impact being transmitted beyond the tunnel region (2) as pure compressive forces onto the side of the floor structure (1) opposing the impact side.

2. Floor structure according to Claim 1, **characterized in that** the transverse bridge (12) comprises in a lower region two plate-shaped fastening portions (18) arranged spaced apart from one another, seen in the transverse direction, which are aligned approximately horizontally and bear against the underside of the floor structure (1) in the region of the transverse seat struts (9).

3. Floor structure according to Claim 2, **characterized in that** on each lateral fastening portion (18) of the transverse bridge (12) at least two screw fastenings (17, 17a) are respectively provided, arranged spaced apart from one another.

4. Floor structure according to Claim 3, **characterized in that** the at least two screw fastenings (17, 17a) of each fastening portion (18) of the transverse bridge (12) are arranged offset to one another in the longitudinal, transverse and vertical directions of the vehicle.

5. Floor structure according to one or more of the preceding claims, **characterized in that** the fastening screws (20) of each screw fastening (17, 17a) extending in the vertical direction, are passed through openings of the transverse bridge (12) for securing the transverse bridge (12), the openings being configured as transversely extending slots (22).

6. Floor structure according to Claim 1, **characterized in that** the transverse bridge (12) is configured as a ribbed cast part made of a light metal alloy.

7. Floor structure according to Claims 1 and 6, **characterized in that** the transverse bridge (12) comprises, for the reinforcement thereof, a plurality of vertical main ribs (25) extending transversely to the longitudinal axis of the vehicle.

8. Floor structure according to Claim 7, **characterized in that** two adjacently arranged main ribs (25) in the region of each fastening portion (18) of the transverse bridge (12) are connected to one another via at least one vertical rib (26) extending in the longitudinal direction of the vehicle.

9. Floor structure according to Claim 1, **characterized in that** the upper limit of the bridge element (14) has a straight, angled or curved shape.

## Revendications

1. Structure de sol (1) d'un véhicule automobile comprenant une zone de tunnel (2), deux traverses de siège (9) disposées à distance l'une de l'autre dans la direction transversale du véhicule ainsi qu'un pontage transversal (12) prévu de manière détachable sur la structure de sol (1) entre les traverses de siège (9), pour renforcer la zone de tunnel (2) de la structure de sol (1) du véhicule automobile en mode de conduite dynamique et en cas de collision latérale, chaque pontage transversal (12) fixé de manière détachable sur la structure de sol (1) présentant deux branches de support latérales (13) s'étendant obliquement et un élément de pontage supérieur (14) reliant les deux branches de support (13), et l'élément de pontage (14) s'étendant avec son bord supérieur approximativement à la hauteur de l'arête supérieure des deux traverses de siège (9), **caractérisée en ce que** le pontage transversal (12) fixé sur le côté inférieur (19) des deux traverses de siège (9) disposées à distance l'une de l'autre présente, dans la région de l'élément de pontage supérieur (14), sur ses deux côtés longitudinaux, à chaque fois des parois (23) orientées verticalement, qui s'étendent à faible distance des portions de paroi (24) orientées dans le même sens des parois latérale du tunnel (5), et **en ce que** dans le cas d'une collision latérale, les portions de paroi verticales (24) des parois latérales du tunnel (5) parviennent d'abord en contact direct avec les parois verticales (23) de l'élément de pontage (14), et du fait de ce blocage, la majeure partie des forces survenant lors de la collision latérale étant transférées au-delà de la zone de tunnel (2) sous forme de simples forces de pression au côté de la structure de sol (1) opposé au côté de la collision.

2. Structure de sol selon la revendication 1, **caractérisée en ce que** le pontage transversal (12) présente, dans une région inférieure, deux portions de fixation (18) en forme de plaque disposées à distance l'une de l'autre dans la direction transversale, qui sont orientées approximativement horizontalement et qui s'appliquent sur le côté inférieur de la structure de sol (1) dans la région des traverses de siège (9).

3. Structure de sol selon la revendication 2, **caractérisée en ce que** l'on prévoit sur chaque portion de fixation latérale (18) du pontage transversal (12) à chaque fois au moins deux fixations de vis (17, 17a) disposées à distance l'une de l'autre.

4. Structure de sol selon la revendication 3, **caractérisée en ce que** les au moins deux fixations de vis (17, 17a) de chaque portion de fixation (18) du pontage transversal (12) sont disposées de manière décalée l'une par rapport à l'autre dans la direction longitudinale, transversale et verticale du véhicule.

5. Structure de sol selon l'une quelconque ou plusieurs des revendications précédentes, **caractérisée en ce que** les vis de fixation (20) de chaque fixation de vis (17, 17a) s'étendant dans la direction verticale sont guidées à travers des ouvertures du pontage transversal (12) pour fixer le pontage transversal (12), les ouvertures étant réalisées sous forme de trous oblongs (22) s'étendant transversalement.

6. Structure de sol selon la revendication 1, **caractérisée en ce que** le pontage transversal (12) est réalisé sous forme de pièce coulée nervurée en alliage de métal léger.

7. Structure de sol selon les revendications 1 et 6, **caractérisée en ce que** le pontage transversal (12) présente, pour son renforcement, plusieurs nervures principales verticales (25) s'étendant transversalement à l'axe longitudinal du véhicule.

8. Structure de sol selon la revendication 7, **caractérisée en ce que** deux nervures principales adjacentes (25) sont connectées l'une à l'autre dans la région de chaque portion de fixation (18) du pontage transversal (12) par le biais d'au moins une nervure verticale (26) s'étendant dans la direction longitudinale du véhicule.

9. Structure de sol selon la revendication 1, **caractérisée en ce que** la limite supérieure de l'élément de pontage (14) présente une forme rectiligne, coudée ou courbe.
